# EUROPÄISCHE PATENTANMELDUNG

(11) **EP 4 439 685 A1**
(43) Veröffentlichungstag der Anmeldung: **02.10.2024**
(21) Anmeldenummer: 23165564.8
(22) Anmeldetag: 30.03.2023
(51) Int. Cl.: H01M 4/04, C25B 1/14, H01M 4/505, H01M 4/58, H01M 10/54, H01M 4/02

(54) **VERFAHREN ZUR HERSTELLUNG EINER LITHIUMHALTIGEN ELEKTRODE UND ELEKTROCHEMISCHE ZELLE**

(71) Anmelder: Siemens Aktiengesellschaft, 80333 München (DE)
(72) Erfinder: Jensen, Jens Dahl, 14050 Berlin (DE); Krüger, Ursus, 14089 Berlin (DE); Winkler, Gabriele, 13587 Berlin (DE)
(74) Vertreter: Siemens Patent Attorneys

(57) **Zusammenfassung**

Die Erfindung betrifft ein Verfahren zur Herstellung einer lithiumhaltigen Elektrode (4) für einen Lithium-Ionen haltigen Akkumulator umfassend folgende Schritte:
- Herstellen einer poröse metallischen Struktur (6),
- Beschichten einer Oberfläche (26) der porösen Struktur (6) mit einer Eisenphosphat-Schicht (28),
- Einbringen der mit der Eisenphosphatschicht (28) versehenen porösen Struktur (6) in eine elektrochemischen Zelle (2) als erste Elektrode (8) die als Kathode (10) dient,
- Einbringen einer zweiten, lithiumhaltigen Elektrode (12) in die Zelle (2), die als Anode (14) dient,
- wobei in die zweite lithiumhaltige Elektrode (12) Lithiumverbindungen (30) eingebracht werden, die aus thermisch zersetzen Elektrodenmaterial eines Lithium-Ionen Akkumulators stammen,
- Einbringen eines nichtwässrigen Elektrolyten (16) in die elektrochemische Zelle (2),
- Verschließen der elektrochemischen Zelle (2) unter Inertbedingungen,
- Anlegen von elektrischem Strom an die Elektroden (8), (12) der elektrochemischen Zelle (2), so dass Lithiumionen (18) von der lithiumhaltigen Anode (14) durch den nicht wässrigen Elektrolyten (16) zur Kathode (10) in Form der poröse Struktur (6) wandern und
- die mit der Eisenphosphatschicht (28) versehene Oberfläche (26) der porösen Struktur (6) zu einer Lithium-Eisenphosphat-Schicht (32) umgewandelt wird.

## Beschreibung

Die Erfindung betrifft ein Verfahren zur Herstellung einer lithiumhaltigen Elektrode nach Patentanspruch 1 sowie eine elektrochemische Zelle nach Patentanspruch 11.

Die Rückgewinnung von wertvollen Metallen wie Nickel, Cobalt und Lithium aus Lithium-Ionen-Akkus erfolgt nach Aufbereitung der Zellen, also nach einer elektrischen Sicherheitsentladung, eine Deaktivierung von verbleibendem Lithiummetall und Verdampfen der Elektrolyten durch einen pyro- und hydrometallurgischen Prozess. Bei dem pyrometallurgischen Prozess fallen neben den Cobalt-Nickel-Kupfer-Legierungen auch lithiumhaltige Schlacke an. Aus dieser lithiumhaltigen Schlacke soll das darin enthaltene Lithium recycelt werden.

Nach dem Stand der Technik wird dieses Lithium durch hydrometallurgische Prozesse aus der Schlacke gewonnen. Die abgeschreckte Schlacke wird mittels Stabmühlen zerkleinert und anschließend über eine Magnetscheibe gegeben, um in der Schlacke eingeschlossene ferromagnetische Legierungsbestandteile wie Nickel und Cobalt zu entfernen. Danach wird die Schlacke mit Schwefelsäure ausgelaugt. Dabei gehen die Lithium-Ionen in Lösung und die verbleibenden Feststoffe, die Gips und Silikate umfassen, werden durch Filtration abgetrennt. Zur Verhinderung eines ungewollten Ausscheidens von Lithiumcarbonat bei nachfolgenden Reinigungsschritten wird das Filtrat bis zur Unterschreitung der Löslichkeitsgrenze von Lithiumcarbonat verdünnt. Das verdünnte Filtrat wird durch Zugabe von Calciumoxid auf einen pH-Wert von 7 eingestellt, um Verunreinigungen, wie Aluminium, Magnesium, Eisen, Mangan, Silicium und Sulfat zu entfernen. Bei diesem pH-Wert fallen Aluminium, Eisen und Silicium sowie einige Schwermetalle als Hydroxide aus. Ein Teil des Sulfates bildet mit dem Calciumoxid schwer lösliches Calciumsulfat (Gips). Nach einer Fest/Flüssig-Trennung wird der pH-Wert durch eine weitere Zugabe von Calciumoxid auf 12 angehoben. Bei diesem pH-Wert werden Magnesium sowie noch weitere Metalle, die sich als Hydroxide oder Sulfatreste in der Lösung befinden, vollständig ausgefällt. Nach einer weiteren Fest/Flüssig-Trennung wird überschüssiges Calcium durch Zugabe von Natriumcarbonat als Kalk ausgefällt und durch Filtration von der Lösung getrennt. Die Lösung wird durch Verdampfen des Wassers stark eingeengt und das Lithium durch Zugabe von Natriumcarbonat bei 100°C als Lithiumcarbonat gefällt. Das abgetrennte Lithiumcarbonat wird mit Ethanol gewaschen, da Lithiumcarbonat im Gegensatz zu Wasser in Ethanol unlöslich ist. Die Reinheit dieses Rohcarbonats beträgt ca. 98 % und bedarf für einen erneuten Einsatz in Batterien einer wiederholten Raffination. Die Gesamtausbringung von Lithium, also die Ausbeute aus der Schlacke, beträgt mit dieser Methode nach dem Stand der Technik ca. 65 %. Diese geringe Ausbeute ist darin begründet, da ein Teil des Lithiums bei der Fällung der Verunreinigungen mit Calciumoxid in die Metallmischoxide mit Aluminium, Magnesium, Eisen oder Mangan eingebunden wird. Dieses Lithium ist chemisch so fest eingebunden, dass es mittels eines Solvent-Extraktions-Verfahrens aus der Ausgangslösung abgetrennt werden müsste, um die Ausbringung noch signifikant zu erhöhen.

Dieses beschriebene Verfahren nach dem Stand der Technik zeigt den sehr hohen nasschemischen Aufwand, der sowohl ökonomisch als auch ökologisch wenig rentabel ist. Die Aufgabe der Erfindung besteht daher darin, ein Verfahren und eine elektrochemische Zelle bereitzustellen, die zur Wiederverwertung von Lithium dient, wobei hiermit eine höhere Ausbeute als im Stand der Technik erreicht wird und gleichzeitig eine Wiederverwertung des zurückgewonnenen Lithiums in einer neuen Elektrode ermöglicht wird.

Die Lösung der Aufgabe besteht in einem Verfahren zur Herstellung einer lithiumhaltigen Elektrode mit den Merkmalen des Patentanspruchs 1 sowie in einer elektrochemischen Zelle mit den Merkmalen des Patentanspruchs 11.

Das Verfahren zur Herstellung einer lithiumhaltigen Elektrode für einen Lithiumionen haltigen Akkumulator nach Patentanspruch 1 umfasst dabei folgende Schritte:
- Herstellen einer porösen metallischen Struktur,
- Beschichten einer Oberfläche der porösen Struktur mit einer Eisenphosphatschicht,
- Einbringen der mit der Eisenphosphat-Schicht versehenen porösen Struktur in eine elektrochemische Zelle als erste Elektrode, die als Kathode dient,
- Einbringen einer zweiten lithiumhaltigen Elektrode in die Zelle, die als Anode dient,
- wobei in die zweite lithiumhaltige Elektroden Lithium-Verbindungen eingebracht werden, die aus thermisch zersetzten Elektrodenmaterial eines Lithium-Ionen-Akkumulators stammen,
- Einbringung eines nicht wässrigen Elektrolyten in die elektrochemische Zelle,
- Verschließen der elektrochemischen Zelle unter Inertbedingungen,
- Anlegen von elektrischem Strom an die Elektroden der elektrochemischen Zelle, sodass Lithium-Ionen von der lithiumhaltigen Anode durch den nicht wässrigen Elektrolyten zur Kathode in Form der porösen Struktur wandern und
- die mit der Eisenphosphatschicht versehene Oberfläche der porösen Struktur zu einer Lithium- EisenPhosphatschicht umgewandelt wird.

Die so beschriebene Erfindung unterscheidet sich vom Stand der Technik elementar darin, dass die üblicherweise aus einer thermischen Zersetzung von Akkumulatoren gewonnene Schlacke, die Lithiumverbindungen enthält, nicht nasschemisch aufgeschlossen wird, sondern wieder erneut in eine Elektrode und in eine elektrochemische Zelle implementiert wird. Von einer herkömmlichen elektrochemischen Zelle und einem herkömmlichen Lithium-Ionen-Akku unterscheidet sich das Verfahren wiederum darin, dass aus dieser genannten Elektrode mit der Lithiumschlacke die Lithiumionen über einen Elektrolyten zur Kathode wandern und in eine speziell dafür vorgesehene Schicht, nämlich in einer Eisenphosphat-Schicht eingelagert werden.

Ferner unterscheidet sich das beschriebene Verfahren auch noch darin vom Stand der Technik, dass die Kathode in dieser elektrochemischen Zelle bzw. in diesem durchgeführten Verfahren so ausgestaltet ist, dass durch ihre poröse Struktur und ihrer darauf vorgesehenen Eisenphosphat-Schicht eine große Oberfläche ausbildet wird, auf der sich nach dem Transport der Lithiumionen eine Lithium-Eisenphosphat-Schicht ausbildet. Mittels dieser ausgebildeten Lithium-Eisenphosphat-Schicht entsteht wiederum eine neue Elektrode. Diese neue Elektrode ist bereits von ihrer Strukturierung der Oberfläche und ihrer Oberflächenbeschichtung als Elektrode für einen neuen Lithium-Ionen-Akku in diesen Fall beispielsweise in Form einer Katode ausgestaltet (Bei einem Akkumulator (Batterie)wird die positiv geladene Elektrode beim Entladungsvorgang als Katode bezeichnet)

Das beschriebene Verfahren bietet nicht nur eine technisch wenig aufwändige und ökonomische Art, die lithiumhaltige Schlacke, die bei thermischer Zersetzung von alten Akkus anfällt, wieder zu verwerten, sondern das beschriebene Verfahren liefert gleichzeitig ein Herstellungsverfahren für eine komplett neue, direkt wieder einsetzbare Elektrode für einen lithiumhaltigen Akkumulator, in diesem Fall für eine Lithium-Eisenphosphat-Batterie.

Grundsätzlich kann die poröse metallische Struktur durch eine Vielzahl von Herstellungsverfahren dargestellt werden. Verfahren zur Herstellung von metallischen Schäumen durch Gaseinbringung sind beispielsweise dazu geeignet. Besonders vorteilhaft zur Herstellung der metallischen Struktur sind jedoch additive Herstellungsverfahren, insbesondere Pulverbettverfahren, wie beispielsweise ein Laserschmelzverfahren oder ein Elektrostrahlschmelzverfahren, bei denen die Oberflächenstruktur und die Porosität exakt nach den Anforderungen, die für eine Elektrode bestehen, designt werden können. Bei dem beschriebenen additiven Verfahren kann die optimale Struktur, die für die Anlagerung von Lithium-Ionen und der Herstellung der Lithium-Eisenphosphat-Schicht erforderlich ist, nahezu perfekt dargestellt werden, wogegen bei aufgeschäumten Metallen die Oberfläche eher einer Zufallsoberfläche entspricht. Als Grundmaterial für die poröse metallische Struktur bietet sich zur additiven Fertigung insbesondere eine Aluminiumlegierung und/oder eine Nickellegierung an.

Der nicht wässrige Elektrolyt umfasst bevorzugt Ethylencarbonat, Propylencarbonat oder Dimethylcarbonat, Acetonitril oder eine ionische Flüssigkeit. Besonders bevorzugt ist dabei das Propylencarbonat, da es günstig herzustellen ist und problemlos betrieben werden kann. Ionische Flüssigkeiten sind dabei Salze, deren Schmelztemperatur insbesondere weniger als 100°C beträgt. Wie alle Salze umfassen sie dabei Anionen und Kationen. Durch deren Variation können die physikalisch chemischen Eigenschaften einer ionischen Flüssigkeit in weiten Grenzen variiert und auf die technischen Anforderungen hin optimiert werden. Dabei können typische Kationen z. B. Imidazolium oder Pyridinium, Ammonium und/oder Phosphonium sein. Als Anionen kommen Halogenide und schwach koordinierende Ionen wie Tetrafluoroborate oder Hexafluorophosphate aber auch Trifluoracetate und Triflate und Tosylate in Frage.

In einer vorteilhaften Ausgestaltungsform der Erfindung weist das Lithium der Lithiumverbindung in der zweiten Elektrode Lithium-Calcium-Silikate und/oder Lithium-Magnesium-Silikate und/oder Lithium-Mangan-Oxide und/oder Lithium-Cobalt-Oxide und/oder Lithium-Nickel-Oxide auf. Dies sind typischerweise Verbindungen, die bei der thermischen Zersetzung von Lithium-Ionen-Akkus in der Schlacke bzw. der Asche, die dabei entsteht, enthalten sind.

Das Lithium-Eisenphosphat, das auf der Oberfläche der metallischen Struktur aufgebracht wird, ist bevorzugt so auf der Oberfläche ausgestaltet, dass eine offene Porosität der Struktur erhalten bleibt. Auf diese Weise können die Lithium-Ionen, die durch den nicht wässrigen Elektrolyten zur Katode gelangen, sich an einer möglichst großen Oberfläche anlagern und zu Lithium-Eisenphosphat reagieren.

Bei der Beschichtung der Oberfläche der porösen Struktur mit Eisenphosphat wird diese bevorzugt in einer Dispersion aus Phosphorsäure und Magnetit getaucht, die bei einer Temperatur zwischen 80°C und 110°C vorliegt. Bevorzugt wird noch ein Oxidationsmittel, insbesondere Wasserstoffperoxid zugeführt.

Der Betrieb des Verfahrens und der Betrieb der elektrochemischen Zelle verläuft unter Inertbedingungen. Als Inertgas ist dabei insbesondere Argon geeignet. Stickstoff würde eine Reaktion mit den Lithium-Ionen im nicht wässrigen Elektrolyt eingehen. Eine Vakuumatmosphäre ist aufgrund des hohen Dampfdruckes der verwendeten Materialien unter Vakuumbedingungen ebenfalls nicht effizient.

Ein weiterer Bestandteil der Erfindung ist eine elektrochemische Zelle zur Herstellung einer Elektrode eines Lithium-Akkumulators. Diese umfasst eine Anode mit einer Lithiumverbindung, die aus einer thermischen Zersetzung von gebrauchten Lithium-Akkumulatoren stammen und eine Katode, die eine poröse metallische Struktur umfasst, die auf ihre Oberfläche mit einer Eisenphosphat-Schicht versehen ist und wobei die Anode und die Katode durch einen nicht wässrigen Elektrolyten voneinander getrennt sind.

Die Vorteile gegenüber dem Stand der Technik, die diese elektrochemische Zelle aufweist, sind bereits bezüglich des erfindungsgemäßen Verfahrens erläutert worden. Diese sind zum einen die technisch unaufwändige, direkte Wiederverwertung von lithiumhaltigen Verbindungen aus der thermischen Zersetzung von Alt-Akkumulatoren bei gleichzeitiger Herstellung einer neuen Katode eines Lithium-Eisenphosphat-Akkumulators. Besonders vorteilhaft ist diese elektrochemische Zelle dann ausgestaltet, wenn mehrere Paare von parallel geschalteten Anoden und Kathoden vorliegen. Auf diese Weise kann ein Upscaling für die Herstellung von Anoden erfolgen und Lithiumschlacke aus dem Rezyklat von Alt-Akkumulatoren großtechnisch wieder verwertet werden.

Für die Herstellung der zweiten Elektrode, der Anode der elektrochemischen Zelle, ist es zweckmäßig, wenn die LithiumVerbindung, also die Schlacke aus der thermischen Zersetzung alter Akkumulatoren mit einem leitfähigen Material, insbesondere mit Kohlenstoffpartikeln vermischt wird und dann verpresst wird. Dabei kommen insbesondere bevorzugt poröse Kohlenstoffpartikel zum Einsatz. Eine derartige gepresste Elektrode aus Lithium-Verbindungen und Kohlenstoffpartikel ist besonders gut im Einsatz der beschriebenen elektrochemischen Zelle geeignet.

Weitere Ausgestaltungsformen und weitere Merkmale werden anhand der folgenden Figuren näher erläutert. Merkmale mit derselben Bezeichnung aber in unterschiedlicher Ausgestaltungsform werden dabei mit demselben Bezugszeichen versehen. Bei den Darstellungen der folgenden Figuren handelt es sich um rein schematische Darstellungen, die keine Einschränkung des Schutzbereiches darstellen.

### Dabei zeigen:

- Figur 1: eine elektrochemische Zelle zur Herstellung einer lithiumhaltigen Elektrode und ein entsprechendes Verfahren dazu,
- Figur 2: eine Upscaling-Version der elektrochemischen Zelle nach Figur 1,
- Figur 3: eine schematische Darstellung der Elektroden zur Erläuterung der Mikrostruktur,
- Figur 4: eine schematische Darstellung eines Laserschmelzverfahrens zur Herstellung einer porösen Struktur,
- Figur 5: eine schematische vergrößerte Darstellung einer Elektrode, die mittels des beschriebenen Verfahrens in der beschriebenen elektrochemischen Zelle hergestellt ist.

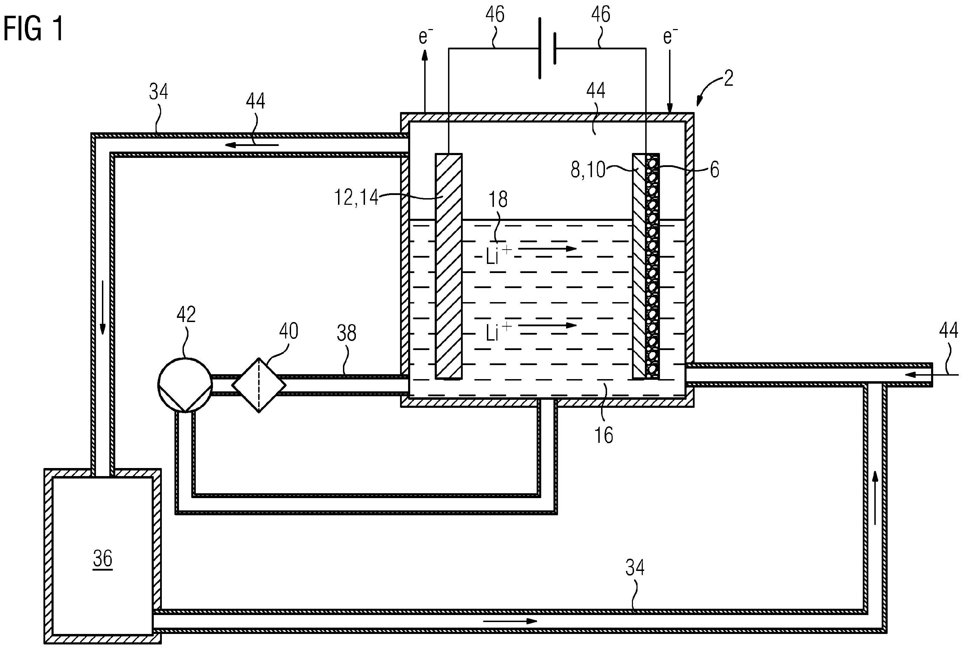

In Figur 1 ist schematisch eine elektrochemische Zelle 2 und ein Verfahren zum Betrieb dieser Zelle 2 beschrieben. Die elektrochemische Zelle 2 umfasst dabei eine erste Elektrode 8, die als Katode 10 ausgestaltet ist. Zum anderen umfasst die Zelle 2 eine zweite, lithiumhaltige Elektrode 12, die als Anode 14 ausgestaltet ist. Beide Elektroden 8, 12 sind in einen nicht wässrigen, flüssigen Elektrolyten 16 getaucht, wobei beim Anlegen eines elektrischen Stroms über Kontaktierungen 46 Lithiumionen 18, die durch das Li⁺ gekennzeichnet sind von der Anode 14 zur Katode 10 in der Zelle 2 wandern. Ferner ist die elektrochemische Zelle 2 unter Inertgas 44, in diesem Fall Argon, betrieben, wobei das Inertgas 44 aus der Zelle 2 abgeleitet wird und in einem Inertgas-Kreislauf 44, dort in einem Gasreinigungssystem 36 aufbereitet wird und der Zelle 2 erneut zugeführt wird. Ferner wird auch der Elektrolyt 16 aufbereitet, wozu ein Elektrolyt-Umwälzsystem 38 dient, in dem eine Pumpe 40 und ein Filter 42 enthalten sind. Als Elektrolyt 16 wird in diesem Fall ein Propylencarbonat verwendet.

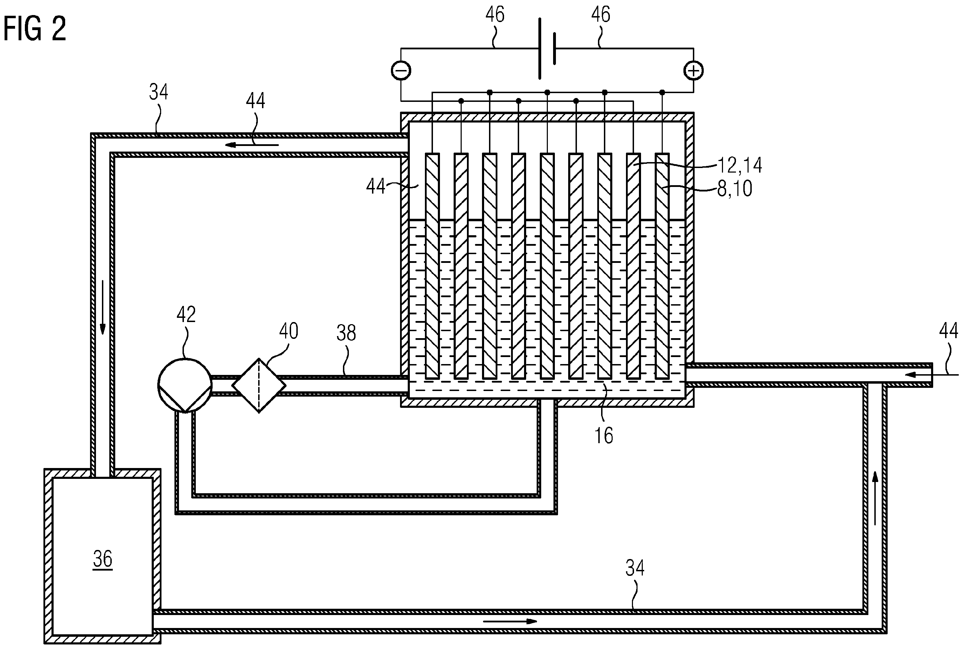

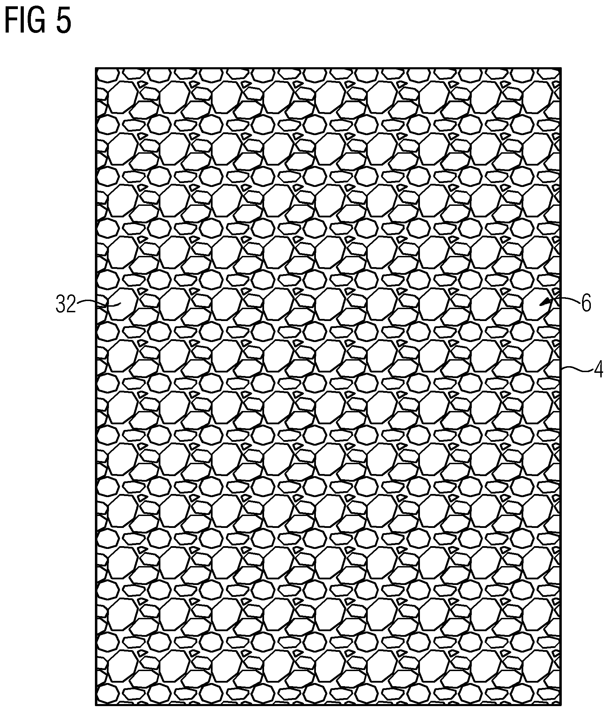

In Figur 2 ist eine analoge Ausgestaltung der elektrochemischen Zelle 2 aus Figur 1 gegeben, jedoch sind eine Vielzahl von Paaren an ersten Elektronen 8 und zweiten Elektronen 12, also Paare von Katoden 10 und Anoden 14 in dieser Zelle 2 parallelgeschaltet. Die Kontaktierung 46 sowie der Inertgas-Kreislauf 34 und das Elektrolyt-Umwälzsystem 38 sind analog zur Zelle 2 in Figur 1 ausgestaltet. Diese Ausgestaltung nach Figur 2 dient insbesondere dazu, ein Upscaling für die Aufbereitung von lithiumhaltigen Verbindungen und der Herstellung einer Elektrode 4 (vgl. Figur 5) zu erzielen. Im Weiteren wird auf den elektrochemischen Prozess und die vorbereitenden Abläufe zur Herstellung der Anode 14 und der Katode 10 für die elektrochemische Zelle 2 genauer beschrieben.

Da Lithium das niedrigste Normalpotenzial von -3,04 V im Periodensystem hat und somit das unedelste aller Elemente ist, können Elektrolyte, die H₃O⁺-Ionen dissoziieren, also hauptsächlich wässrige Elektrolyte für lithiumhaltige Zellen nicht verwendet werden. Bei einer elektrochemischen Abscheidung würde sonst eher der Wasserstoff als das Lithium abgeschieden werden. Das elektrochemische Fenster von Wasser beträgt 1,2 V. In diesem elektrochemischen Potenzial der Elektrode wird der Elektrolyt weder oxidiert noch reduziert. Dieser Bereich ergibt sich aus der Differenz von Oxidationspotenzial (anodische Grenze) und Reduktionspotenzial (katodische Grenze). Außerhalb dieses Bereiches reagiert der Elektrolyt an der Elektroden-Oberfläche. Wasser wird dabei elektrolysiert.

Anstelle von Wasser kommt für die Abscheidung von Lithium a-protische, polare Lösungsmittel, wie Ethylencarbonat, Propylencarbonat oder Dimethylcarbonat, Acetonitril oder ionische Flüssigkeiten zum Einsatz. Die organischen Carbonate und ionischen Flüssigkeiten haben ein größeres elektrochemisches Fenster. Bei Propylencarbonat liegt das elektrochemische Fenster bei 4 V und ionische Flüssigkeiten zeigen einen Wert von 3 V bis 6 V. Da das elektrochemische Fenster durch geringe Wassereinträge (ca. 3 Gew.%) von 4 V auf 2 V gesenkt wird, ist es notwendig, wasserfrei zu arbeiten. Außerdem reagiert Lithium schon bei Raumtemperatur mit Stickstoff zu Lithiumnitrid und mit Sauerstoff zu Lithiumoxid. Daher wird die elektrochemische Zelle 2 mit Inertgas 44, insbesondere Argon oder Schwefeldioxid gespült. Die Gasspülung der Zelle 2 erfolgt im Inertgas-Kreislauf 34, wobei das Inertgas 44 ständig zwischen der Zelle 2 und der Gasreinigungsanlage 36 umgewälzt und kontinuierlich aufbereitet wird. Das Gasreinigungssystem 36 entzieht dem Inertgas 44 Sauerstoff und Feuchtigkeit mittels eines Kupferkatalysators und eines Molekularsiebs.

Dadurch werden Reinheitsgrade von bis zu < 1 ppm. O₂ und < 1 ppm H₂O erreicht.

Außerdem muss die elektrochemische Zelle 2 gegenüber der Umwelt abgeschlossen sein, damit keine Luftfeuchtigkeit sowie kein Sauerstoff oder Stickstoff in die Zelle 2 eintritt. Der Elektrolyt 16 wird zur Aufbereitung ebenfalls ständig über Filteranlagen 42 mittels einer Pumpe 40 gepumpt und in die abgeschlossene elektrochemische Zelle 2 zurückgeführt.

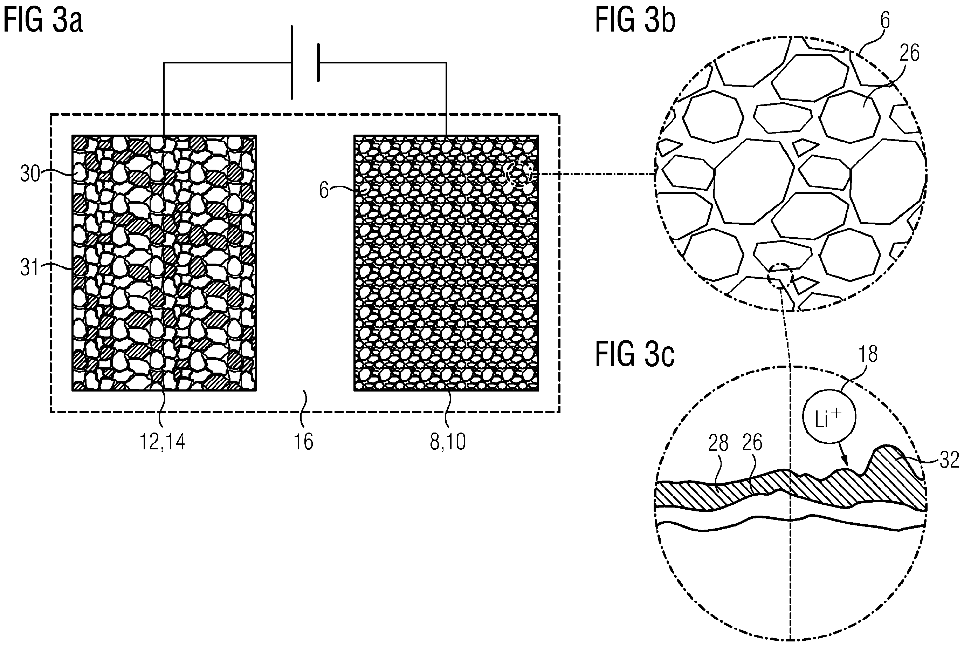

Zur Herstellung der zweiten Elektrode 12, also der Katode 14, wird eine Lithium-Schlacke, die bei der thermischen Zersetzung von alten, gebrauchten Lithium-Ionen-Akkus anfällt, eingesetzt. Daher weist diese zweite Elektrode 12 Lithiumverbindungen 30 auf, was beispielsweise in Figur 3 dargestellt ist. Diese Lithiumverbindungen 30, die auch als Lithiumschlacke bezeichnet werden können, weil sie eben aus den thermisch zersetzten Resten von Lithium-Akkumulatoren stammt, enthalten Lithium-Calcium-Silikate, Lithium-Magnesium-Silikate, Lithiumfluorid und/oder Lithiumaluminit. Bei der Zersetzung bestimmter NMC-Batterien, die Mangan enthalten, befindet sich je nach Mangan-Gehalt auch Lithium-Mangan-Oxid (Li₂Mn₂O₃ oder dazugehöriger Spinell-Typ LiMn₂O₄) in der Schlacke. Diese Lithium-Schlacke muss zunächst mechanisch aufbereitet werden, indem die Schlacke gebrochen und in einer Scheibenschwingmühle oder einer Kugelmühle zu Partikeln zermahlen wird. Anschließend wird das so gewonnene Pulver aus der Schlacke mit elektrisch leitfähigen Kohlenstoffpartikeln 31 (z. B. elektrisch leitfähiger Rus, poröses leitfähiges Kohlenstoffpulver oder Grafit) in einem Pflugscharmischer für Batteriemassen innig vermischt. Die Mischtrommel verfügt über eine keramische Auskleidung. Mischelemente, Mischerwelle und Messköpfe sind bevorzugt mit einem dünnen extrem festen keramischen Überzug (z. b. Aluminiumoxid oder Wolframcarbid) versehen, sodass Fremdionen vermieden werden können. Im Pflugscharmischer wird in kurzer Zeit eine homogene Durchmischung erreicht. Poröse leitfähiges Kohlenstoffpulver in Form von Kohlenstoffpartikel 31, beispielweise unter dem Handelsnamen Porocarb erhältlich, ist besonders gut als Additiv für die Elektrodenformulierung geeignet, weil nach der Elektrodenverdichtung lokale Bereiche mit hoher Porosität vorhanden sind.

Die makroporösen Kohlenstoffpartikel 31 werden zur Verbesserung der ionischen Leitfähigkeit in der Elektrode 12 eingesetzt. Bei fortschreitender Anodendegradation wird durch den Anteil an Makroporen ein Kapazitätsverlust vermindert. Außerdem wird durch die Porosität der Partikel 31 die mechanische Stabilität der Elektrode 12 nach der Verdichtung erhöht. Das gemischte Pulver (Gemisch Lithiumverbindung 30 und Kohlenstoffpartikel 31) wird in eine Pressform gefüllt und in einem Pressvorgang verdichtet. Dabei kann es sich um ein uniaxiales Pressen mittels eines Oberstempels oder durch ein isostatisches Pressen bei ca. 300 bar in einem Ölbad handeln. Auf diese Weise wird eine bevorzugt zylindrische Elektrode geformt. Diese so hergestellte zweite Elektrode 12 wird in der Zelle 2 als Anode 14 eingebracht.

Die dazugehörige Katode 10 der elektrochemischen Zelle wird dabei bereits im vornherein so aufgebaut, dass sie während des Prozesses in der elektrochemischen Zelle 2 zu einer Elektrode 4 eines Lithium-Eisenphosphat-Akkumulators (LFP-Akku) umgewandelt wird. Das heißt die Katode 10 in der Zelle wird während des Zellenbetriebs so verändert, dass sie am Ende des Verfahrens als neue eigenständige, lithiumhaltige Elektrode 4 (vgl. Figur 5) erscheint. Diese positive Elektrode eines LFP-Akkus, also die Elektrode 4 besteht aus einem Stromkollektor und einer Energiespeichernennschicht. Bei dieser Schicht handelt es sich um das elektrochemisch aktive Material Lithium-Eisenphosphat. Der Stromkollektor hingegen kann die Form einer Metallfolie oder bevorzugt einer porösen Metallstruktur aufweisen. In diesem Fall ist er in Form einer porösen Metallstruktur, die beispielsweise aus Aluminium oder Nickel oder einer Legierung dieser Elemente aufgebaut ist, ausgestaltet.

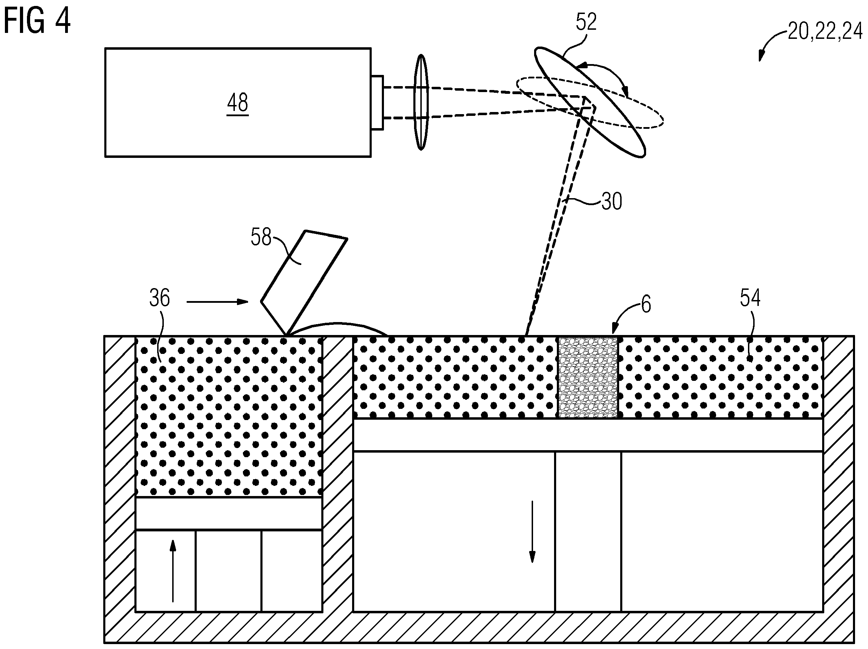

Diese poröse Metallstruktur 6 lässt sich bevorzugt durch ein additives Fertigungsverfahren beispielsweise über ein selektives Laser-Schmelzverfahren oder ein selektives Elektronenstrahl-Schmelzverfahren herstellen. Dies ist exemplarisch in Figur 4 beschrieben. Dabei werden Aluminium oder Nickel in einer Pulverform als Pulverbett 54 auf eine Grundplatte aufgebracht. Anschließend wird das aufgebrachte Metallpulver mittels eines Laserstrahls 50, der aus einem Laser 48 stammt, lokal vollständig umgeschmolzen und es bildet nach dem Erstarren eine feste Metallschicht. Die Grundplatte wird dabei um den Betrag der Schichtdicke abgesenkt und erneut Pulver, beispielsweise mittels eines Rakels 58 aus einem Pulvervorrat 56 aufgetragen. Dieser Zyklus wird so lange wiederholt, bis alle Schichten umgeschmolzen sind und die fertige poröse Struktur 6 entstanden ist.

Auf diese Weise ist es möglich, komplexe Strukturen zu formen, die exakt die Oberflächenbeschaffenheit haben, die für den Betrieb der Elektrode 4 optimal ist. Hierzu kann mittels eines CAD-Verfahrens ein digitaler Zwilling der Struktur 6 und einer Verfahrens-Steuerung exakt digital abgebildet werden. Im Unterschied zu möglichen Aufschäumverfahren von metallischen Schäumen kann auf diese Weise eine prädeterminierte Struktur 6 erzeugt werden. Der digitale Zwilling der Struktur 6 und der Verfahrenssteuerung kann auf einer Datenbank abgelegt sein und bei Bedarf durch einen Datenbanknutzer abgerufen werden.

Die fertige poröse Struktur 6 wird vom überschüssigen Pulver gereinigt und weiterverarbeitet. Hierbei sind bei der Darstellung der Struktur 6 Schichtdicken von 15 µm bis 500 µm möglich, d.h. dass die Struktur 6 als Stromkollektor nach ca. zwei bis drei Zyklen bereits fertig ist. Da die Daten für die Führung des Lasers 48 (oder alternativ eines Elektronenstrahls, der hier nicht dargestellt ist) aus einem 3D-CAD-Körper mittels Software erzeugt werden, besteht eine große Geometriefreiheit der Elektrodenform.

Bei den genannten additiven Fertigungsverfahren selektives Laserschmelzen oder selektives Elektronenstrahlschmelzen können periodisch offenzellige (offenporige) Metallstrukturen mit definierter Porengröße und Zellengeometrie erzeugt werden. Die periodisch zellulären Metallstrukturen basieren auf einer Tetradekaeder-Geometrie mit zylindrischer Zellsteg-Morphologie. Ein Tetradekaeder ist ein Polyeder mit 14 Flächen. Offenzellige Metallstrukturen haben den Vorteil einer Oberflächenvergrößerung für die vermehrte Aufnahme von energiespeicherndem Material und damit für eine Steigerung der Energiedichte.

Die offenporige, poröse Metallstruktur 6 aus Aluminium oder Nickel bzw. Legierungen hieraus werden nun mit einer Schicht aus Eisenphosphat zur Aufnahme von Lithium-Ionen versehen. Dazu werden die Metalloberflächen in einem Eisenelektrolyten galvanisch mit Eisen beschichtet. Der Elektrolyt enthält wasserlösliche Eisen (II)-Salze wie Eisen (II)-Sulfat oder Eisen (II)-Fluoroborat und Ammoniumchlorid als Leitsalz.

Der pH-Wert des Elektrolyten beträgt 3 bis 4. Die Abscheidung von Eisen wird bei einer Temperatur von 40°C bis 70°C durchgeführt. Die Stromdichte beträgt 3 A/dm² bis 4 A/dm². Um die Bildung von Sauerstoff an der Anode zu verhindern, wird als anodischer Depolarisator Diethylhydroxylamin eingesetzt. Die zu beschichtende Metalloberfläche wird als Katode geschaltet. Die Anoden bestehen aus Reinst-Eisen (99,99 %). Die gelösten Fe²⁺-Ionen wandern zur Katode und werden dort zu elementarem Eisen reduziert und bilden eine dünne Eisenschicht auf der Metalloberfläche. Zur Herstellung einer Eisenphosphat-Schicht werden Phosphorsäure und Magnetit (Fe₃O₄) in Wasser bei 10.000 UpM für ca. zehn Minuten mit einem Dispergierstab homogenisiert. In dieser Dispersion werden die mit Eisen präparierten Oberflächen der porösen Struktur 6 getaucht. Zwischen dem Fe³⁺ aus dem oxidischen Magnetit und dem elementaren Eisen aus den verstählten Oberflächen findet eine Redoxreaktion statt, wobei in einer Komproportionierung Fe²⁺ gebildet wird. Dabei ändert sich die Farbe der Dispersion von schwarz nach grün-braun und die Ausgangsstoffe gehen in die Lösung. Bei dieser Redoxreaktion erwärmt sich der Elektrolyt um 2°C bis 20°C auf Temperaturen von 20°C bis 40°C. Sobald kein weiterer Temperaturanstieg festgestellt wird, wird das Reaktionsgemisch mit den Metalloberflächen auf 80°C bis 100°C unter Zugabe von Wasserstoffperoxid (35 Gew. %) erhitzt. Die in der Lösung befindlichen Fe²⁺-Ionen werden zu Fe³⁺-Ionen oxidiert. Als Zersetzungsprodukt von Wasserstoffperoxid entsteht Sauerstoff. Mit Hilfe von Schnelltests auf Fe²⁺-Ionen wird überprüft, ob die Oxidationsreaktion vollständig abgelaufen ist. Der rosa gefärbte Elektrolyt mit den Metalloberflächen wird bei 80°C gehalten und das Eisen (III)-Phosphat auf der Metalloberfläche ausgefällt. Nach dem Ausfällen werden die beschichteten Metallfolien oder die porösen Metallstrukturen im Trockenschrank für ca. drei Stunden bei 80°C getrocknet.

In Figur 3 ist noch einmal sehr schematisch eine Mikrostruktur der jeweiligen Elektroden 12, 8 in der Zelle 2 dargestellt. Auf der linken Seite ist die Anode 14 in Form der zweiten Elektrode 12 dargestellt. Diese umfasst, wie bereits beschrieben, die lithiumhaltigen Verbindung 30, also die Lithiumschlacke mit den genannten Lithium-Verbindungen. Zudem ist die Struktur mit leitfähigen Kohlenstoffpartikel 31 versehen und zu einer Elektrode 12 verdichtet. Auf der rechten Seite der Figur 3 ist die Katode 10 dargestellt, in dem die poröse Struktur 6 abgebildet ist. Die zweifach herausvergrö-βerten kreisförmigen Ausschnitte 3b und 3c aus der ersten Elektrode 8, also der Katode 10, zeigen die poröse Struktur 6 zunächst die Oberfläche 26 dieser porösen Struktur und in der nächsten Vergrößerungsansicht die Oberfläche 26 mit einer darauf aufgebrachten Eisenphosphat-Schicht 28, die nach dem vorher beschriebenen Abscheideverfahren aufgebracht ist. Dabei ist in der vergrößerten Darstellung gemäß Figur 3c in diesem Kreis eine gestrichelte Linie senkrecht eingezeichnet. Die linke Seite zeigt dabei die Oberfläche 26 mit der Eisenphosphat-Schicht 28 und die rechte Seite zeigt die Lithium-Ionen 18, die mit der Eisenphosphat-Schicht 28 bereits zu Lithium-Eisenphosphat 32 reagiert haben.

In Figur 5 ist noch einmal die daraus entstandene Elektrode 4 dargestellt, die im Wesentlichen der rechten Elektrode 8, also der Katode 10 der Zelle 2 in dem Verfahrensschritt gemäß Figur 3c auf der rechten Seite entspricht. Diese Elektrode 4 ist somit mit der Lithium-Eisenphosphat-Schicht 32 versehen, die auf der porösen metallischen Struktur 6 aufgebracht ist. Grundsätzlich kann diese Elektrode 4 gemäß Figur 5 dazu verwendet werden, in einen neuen Lithium-Eisenphosphat-Akkumulator eingesetzt zu werden.

In dem beschriebenen Verfahren zur Herstellung dieser Elektrode 4 wird somit recycliertes lithiumhaltiges Material eingesetzt, um direkt eine neue gebrauchsfertige Elektrode 4 für einen neuen Akkumulator zu erzeugen.

### Bezugszeichenliste

- 2: elektrochemische Zelle
- 4: lithiumhaltige Elektrode
- 6: poröse metallische Struktur
- 8: erste Elektrode
- 10: Kathode
- 12: zweite Elektrode
- 14: Anode
- 16: nichtwässriger Elektrolyt
- 18: Lithiumionen
- 20: additives Herstellungsverfahren
- 22: Pulverbettverfahren
- 24: Laserschmelzverfahren
- 26: Oberfläche poröse Struktur
- 28: Eisenphosphat-Schicht
- 30: Lithiumverbindungen
- 31: Kohlestoffpartikel
- 32: Lithium-Eisenphosphat-Schicht
- 34: Inertgaskreislauf
- 36: Gasreinigungssystem
- 38: Elektrolytumwälzsystem
- 40: Pumpe
- 42: Filter
- 44: Inertgas
- 46: Kontaktierung
- 48: Laser
- 50: Laserstrahl
- 52: Laseroptik
- 54: Pulverbett
- 56: Pulvervorrat
- 58: Rakel

## Patentansprüche

1. Verfahren zur Herstellung einer lithiumhaltigen Elektrode (4) für einen Lithium-Ionen haltigen Akkumulator umfassend folgende Schritte:
- Herstellen einer poröse metallischen Struktur (6),
- Beschichten einer Oberfläche (26) der porösen Struktur (6) mit einer Eisenphosphat-Schicht (28),
- Einbringen der mit der Eisenphosphatschicht (28) versehenen porösen Struktur (6) in eine elektrochemischen Zelle (2) als erste Elektrode (8) die als Kathode (10) dient,
- Einbringen einer zweiten, lithiumhaltigen Elektrode (12) in die Zelle (2), die als Anode (14) dient,
- wobei in die zweite lithiumhaltige Elektrode (12) Lithiumverbindungen (30) eingebracht werden, die aus thermisch zersetzen Elektrodenmaterial eines Lithium-Ionen Akkumulators stammen,
- Einbringen eines nichtwässrigen Elektrolyten (16) in die elektrochemische Zelle (2),
- Verschließen der elektrochemischen Zelle (2) unter Inertbedingungen,
- Anlegen von elektrischem Strom an die Elektroden (8), (12) der elektrochemischen Zelle (2), so dass Lithiumionen (18) von der lithiumhaltigen Anode (14) durch den nicht wässrigen Elektrolyten (16) zur Kathode (10) in Form der porösen Struktur (6) wandern und
- die mit der Eisenphosphatschicht (28) versehene Oberfläche (26) der porösen Struktur (6) zu einer Lithium-Eisenphosphat-Schicht (32) umgewandelt wird.

2. Verfahren nach Anspruch 1, **dadurch gekennzeichnet, dass** die poröse Struktur (6) mittels eines additiven Verfahrens (20) hergestellt wird.

3. Verfahren nach Anspruch 2, **dadurch gekennzeichnet, dass** die Poröse Struktur (6) mittels eines Pulverbettverfahrens (22) hergestellt wird.

4. Verfahren nach Anspruch 3, **dadurch gekennzeichnet, dass** das Pulverbettverfahren (22) ein Laserschmelzverfahren (24) oder ein Elektronenstrahl-Schmelzverfahren ist.

5. Verfahren nach einem der vorhergehenden Ansprüche, **dadurch gekennzeichnet, dass** ein Grundmaterial der porösen metallischen Struktur (6) eine Aluminium- und/oder NickelLegierung ist.

6. Verfahren nach einem der vorhergehenden Ansprüche, **dadurch gekennzeichnet, dass** der nicht wässrige Elektrolyt (16) Ethylen-, Propylen- oder Dimethylcarbonat, Acetonitril oder eine ionische Flüssigkeit umfasst.

7. Verfahren nach einem der Ansprüche 2 bis 6, **dadurch gekennzeichnet, dass** die Lithiumverbindung (30) Lithium-Calcium-Silikate und/oder Lithium-Magnesium-Silikate und/oder Lithium-Mangan-Oxide und/oder Lithium-Cobalt-Oxide und/oder Lithium-Nickel-Oxide umfasst.

8. Verfahren nach einem der vorhergehenden Ansprüche, **dadurch gekennzeichnet, dass** das Lithium-Eisenphosphat auf einer Oberfläche (26) der Struktur (6) derart aufgebracht wird, dass eine offene Porosität der Struktur (6) erhalten bleibt.

9. Verfahren nach einem der vorhergehenden Ansprüche, **dadurch gekennzeichnet, dass** zur Beschichtung der Oberfläche der porösen Struktur (6) mit Eisenphosphat die Poröse Struktur (6) in eine Dispersion aus Phosphorsäure und Magnetit getaucht wird und auf eine Temperatur zwischen 80° C und 110°C erhitzt wird und dabei ein Oxidationsmittel, insbesondere Wasserstoffperoxid hinzugefügt wird.

10. Verfahren nach einem der vorhergehenden Ansprüche, **dadurch gekennzeichnet, dass** die Inertbedingungen durch Argon als Schutzgas bereitgestellt werden.

11. Elektrochemische Zelle zur Herstellung einer Elektrode eines Lithium-Akkumulators umfassend eine Anode (14) mit Lithiumverbindungen (30), die aus einer thermischen Zersetzung von gebrauchten Lithium-Akkumulatoren stammen und einer Kathode (10), die eine poröse metallische Struktur (6) umfasst, die auf ihrer Oberfläche (26) mit einer Eisenphosphat-Schicht (28) versehen ist und wobei die Anode (14) und die Kathode (10) durch einen nicht wässrigen Elektrolyten (16) voneinander getrennt sind.

12. Elektrochemische Zelle nach Anspruch 11, **dadurch gekennzeichnet, dass** in der elektrochemischen Zelle (2) mehrere Paare von parallelgeschalten Anoden (14) und Kathoden (10) vorliegen.

13. Elektrochemische Zelle nach Anspruch 11 oder 12, **dadurch gekennzeichnet, dass** die Lithiumverbindungen (30) mit Kohlstoffpartikel (32), bevorzugt mit porösen Kohlenstoffpartikel (32) vermischt sind.

14. Elektrochemische Zelle nach einem der Ansprüche 11 bis 14, **dadurch gekennzeichnet, dass** die poröse metallische Struktur (6) durch ein additives Herstellungsverfahren (20) hergestellt ist.

15. Computerprogramm umfassend einen digitalen Zwilling zur digitalen Abbildung der Struktur (6) aus einem Verfahren nach einem der Ansprüche 1 bis 10 oder aus einer elektrochemischen Zelle nach einem der Ansprüche 11 bis 14.
